# EUROPEAN PATENT SPECIFICATION

(11) **EP 3 309 297 B1**
(45) Date of publication and mention of the grant of the patent: **14.10.2020**
(21) Application number: 16806457.4
(22) Date of filing: 03.06.2016
(51) Int. Cl.: E01C 19/10, B28C 9/04, B65G 21/08

(54) **MOBILE ASPHALT PLANT WITH THERMAL AND ACOUSTIC INSULATION**
MOBILE ASPHALTANLAGE MIT THERMISCHER UND AKUSTISCHER ISOLIERUNG
USINE MOBILE D'ASPHALTE AVEC ISOLATION THERMIQUE ET ACOUSTIQUE

(30) Priority: 09.06.2015 BR 202015133850 U
(43) Date of publication of application: 18.04.2018
(73) Proprietor: Ciber Equipamentos Rodoviários LTDA, 91140-380 Porto Alegre (BR)
(72) Inventor: SCHWARZ FRANCESCHINI, André, 91060-370 Porto Alegre (BR); PICCOLI, Guilherme Luiz, 90430-010 Porto Alegre (BR)
(74) Representative: KIPA AB
(86) International application number: PCT/BR2016/050126
(87) International publication number: WO 2016/197218

(56) References cited:
- BR-A2- PI0 805 002
- BR-U- 8 300 818
- JP-A- 2002 362 727
- US-A- 2 805 052
- US-A- 4 477 250
- US-A- 4 477 250
- US-B1- 7 758 235
- US-B1- 7 758 235

## Description

The invention relates to a mobile asphalt plant with a thermal and acoustic insulation according to the preamble of claim 1.

### KNOWN STATE OF THE ART

Currently the use of mobile asphalt plants is a major technological breakthrough in the asphalt industry. The demand for such mainly derives from the need to move these mobilities in a short timeframe, streamlining the production process without overspending on cargo transport.

A number of alternatives related to mobile asphalt plant configurations can be observed as in the case of the Brazilian utility model MU 8902008-1 - *"Asphalt Plant Provided with Independent Carts and Possibility of Angled Assembly",* in which the assembly of the plant, containing all its production subsystems, can be installed both in a line or at an any angle and can be mounted on different sites. Said plant has two modules, wherein the dosage system is located in one module and cleaning system in the other. In turn, the utility model MU 8201924-0 - *"Constructive Arrangement in Hot Asphalt Plant",* presents an arrangement considered to be small-scale which comprises all the components for manufacturing hot mix asphalt on a single chassis.

Further in the context of the present solution is Chinese patent CN102966023 - *"Movable Continuous Asphalt Mixture Mixing Plant',* where the continuous asphalt plant simultaneously satisfies environmental protection policies and energy conservation. In turn, Korean patent KR100682605 - *"A Mobile Asphalt Mixing Plant",* consists of an asphalt mixing plant with ease of assembly, placing the equipment rapidly into operating conditions.

MU8,300,818-7 described a mobile asphalt plant counterflow of small/medium size which allows for easy installation and demobilization.

US4,477,250 discloses a way to add recycled material to gravimetric plants during the production of Hot Mix Asphalt (HMA). By using a dedicated dryer for the recycled material, a duct and damp system allows the exceeding heat from the gravimetric dryer to be drawn into the recycle dryer and then directed it to the filtration system. In the dryer dedicated to Reclaimed Asphalt Pavement (RAP), the recycle outlet temperature is maintained from an additional burner.

US 7,758,235 discloses employing recycled material (Reclaimed Asphalt Pavement - RAP). According to the author, limitations are linked especially to the overheating of the virgin material and to the overload of the exhaust system. This is solved by using indirect methods of heating the recycled through a gradual increase of the temperature of the recycling and consequent removal of its humidity.

The various systems that are part of the mobile asphalt plants allow the Hot Mix Asphalt (HMA) to be properly manufactured for later use. The production process begins with the virgin rock material, which is pre-selected, and subsequently the dosage of these aggregates is performed. At the end of this step, the wet material is transferred to a rotary dryer via a conveyor belt.

In the asphalt plants counter-flow with external mixture, object of the present specification, a burner is installed in the region opposite the entrance of the wet material having the objective of drying and heating it, respectively. The rotary drum dryer increases the heat transfer via internal fins. Special fins are inserted along the drum dryer so that the heat provided by the burner flame is efficiently transferred to the aggregate.

After the drying and heating step of the rock material, the material is sent to a Pug Mill-type twin-shaft mixer. From here onwards, the Asphalt Cement (AC) is injected. The AC will be mixed with the aggregate and the result of this intense mixing process will be the Hot Mix Asphalt. Once the process has finished, the asphalt mix is unloaded onto trucks or storage silos via a drag conveyor. The outlet temperature of this mix usually varies between 150-170°C.

The products from the combustion and drying present inside the dryer along with a small portion of the fine material are sent to the equipment's cleaning system by an exhaust fan. The air is purified by a primary inertial collector and by pleated-type filters. Evaluating the particle size of the material suctioned by the exhaust duct, the primary inertial collector will respond by the collection and reincorporation of the coarser fraction. This primary separation procedure enables the materials with the highest abrasion potential not to damage the filtering elements mounted downstream. Finally, the material not collected in the first stage, which corresponds to the smaller particle size is directed to the baghouse. Similarly, to the primary collector, the pleated-type filters prevent the rock material carried by the products from combustion and drying from being sent into the atmosphere and performs reincorporation to the external mixer.

During the manufacturing process of the Hot Mix Asphalt, high temperatures are noted in certain regions of the asphalt plant. Nevertheless, no alternative arrangement applied to mobile asphalt plants, as cited previously, has developed fairings to isolate these regions in order to increase work safety and prevent the risk of burns to the operator.

Currently, the concept project of mobile asphalt plants at domestic and international level has been constantly adapting to meet safety standards. These standards serve as a beacon in the implementation of collective protection measures designed to reduce the risk of accidents and offer conditions of comfort and safety at work. The design of accessible moving parts during normal operation, for example, should include protective items to prevent pinch points, clinging, trapping, and high temperature regions. Apart from the contact with heated surfaces, additional risks such as noise and ionizing radiation are also contemplated in regulatory safety standards and should be considered.

From the existing drawbacks in the arrangements of mobile asphalt plants used currently, described above in the state of the art, there is a visible gap in the existence of a protection implemented in the regions where the systems use high temperatures and noise during the production Hot Mix Asphalt (HMA). There is still no asphalt plant that contains protection shields/fairings for more hazardous regions in order to avoid injuries, currently neglected in many items of equipment.

### SUMMARY OF THE INVENTION

The invention relates to a mobile asphalt plant with a thermal and acoustic insulation having the features of claim 1.

With a view to filling the gaps seen in the state of the art, the present invention provides an innovative solution relating to a mobile asphalt plant endowed with heat-insulating protectors (shields) for regions where the equipment operates at high temperatures.

Considering that in large mobile asphalt plants, due to matters of sizing, it is customary to transfer the dosage region to an independent mobility, the systems responsible for drying, heating, filtering, exhaustion, mixing and discharging are installed in a second mobility. The transfer of the virgin aggregate of the dosage system to the drying/heating system will require a conveyor belt, which is installed and aligned in the vicinity of the dryer. Since this region constitutes the gateway of the virgin aggregate to the dryer, the temperature at this location should be high and access thereto should be prevented by implementing shields installed at the intersection between the two mobilities. Moreover, elements such as the conveyor belt, due to their movement for transporting the virgin aggregate, may cause injuries to operators if access is not barred. Thus, the side protectors will prevent the workers operating the equipment from having access to the virgin aggregate conveyor.

In continuous asphalt plants, counter-flow and with external mixing, both the burner and the Pug-mill external mixer, are mandatorily allocated in a common region. The combustion process run by the burner is performed by an optimal ratio between fuel and air. Even though the flame resulting from the combustion enclosed within the rotary dryer and the combustion chamber uses thermally-insulating materials, high temperatures may be noted due to the thermal radiation in the region where both burner and mixer are installed. When heavy fuels are used, it is necessary to reduce the viscosity thereof as of heating. In this case, it is necessary to use jacketed pipes heated by thermal oil or through electrical resistances. Blanketing with thermal oil or electrical resistances must necessarily also be used in the pipes that convey the Asphalt Cement (AC) to the sprinkler bar of the mixer.

Thus, the present solution also seeks to protect the region comprising the burner and the mixer in order to avoid any contact of the operators with the system and provide noise attenuation in this region, which has items with higher noise emission. Therefore, by using the shields that thermally and acoustically isolate these regions, it is possible to increase comfort and safety at work.

### DESCRIPTION OF THE ACCOMPANYING DRAWINGS

So that the present utility model is fully understood and put into practice by any skilled person from this technical field, it will be in a clear, concise and sufficient manner, based on the accompanying drawings listed below that illustrate and support:
Figure 1 is a perspective view of the mobile asphalt plant with the region of the burner and mixer and the region of the aggregate conveyor belt without side protectors.
Figure 2 is the mobile asphalt plant according to the invention with the side protectors in the transport region and the articulated side protector relating to the region of the mixer and burner.

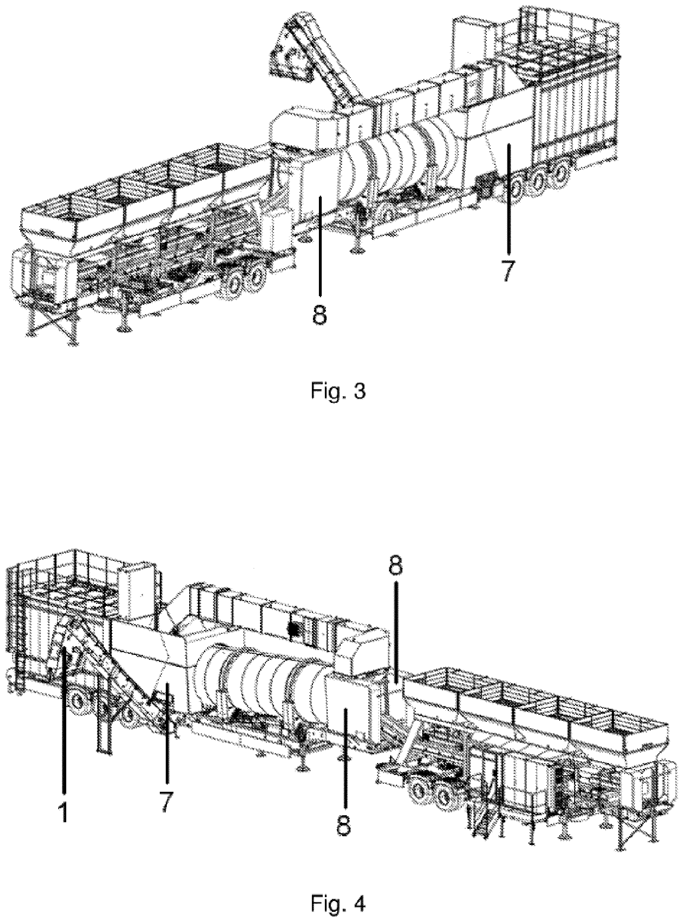

Figure 3 is the mobile asphalt plant according to the invention with the side protector of the region of the mixer and burner closed.
Figure 4 is the mobile asphalt plant according to the invention with the side protector closed in the region of the drag conveyor.

### DETAILED DESCRIPTION OF THE UTILITY MODEL

Since in large mobile asphalt plants the dosing region is transferred to an independent mobility, the systems of drying, heating, filtering, exhaustion, mixing and unloading are installed on a second mobility and the transfer of the virgin aggregate from the dosage system to the drying/heating system will require a conveyor belt (6), which is installed and aligned in the vicinity of the dryer (5).

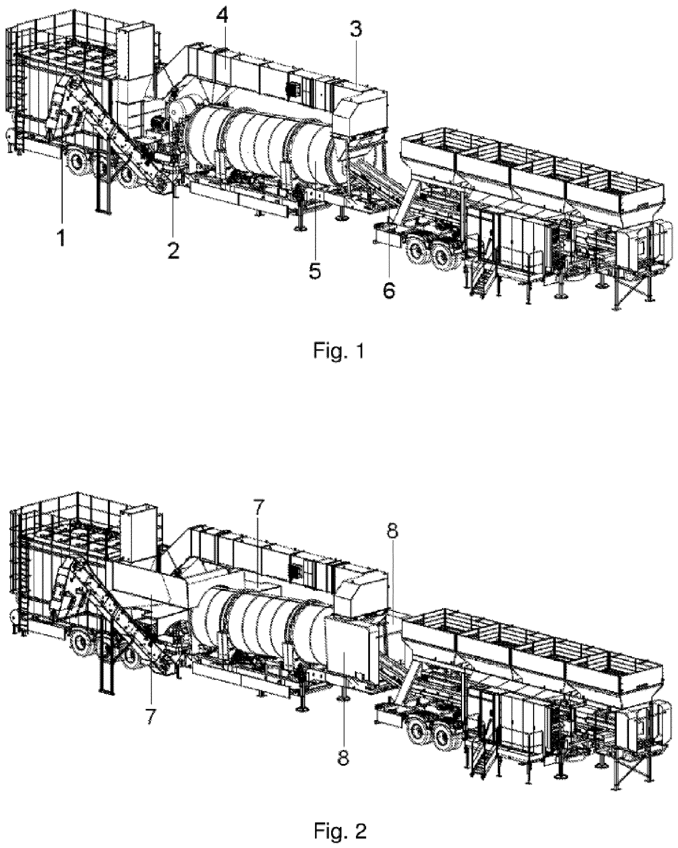

According to Figure 1, it is possible to note the arrangement of an asphalt plant currently used for the production of Hot Mix Asphalt, wherein the step of dosing aggregates is followed by the step of sending the wet virgin material to a rotary dryer (5) via the conveyor belt (6). A burner is installed in the region (2) opposite the entrance of the wet virgin material in order to dry and heat it, respectively. Special fins are employed along the drum dryer (5) so that the heat provided by the burner flame is efficiently transferred to the virgin aggregate.

After the drying and heating step, the material is sent to a Pug Mill-type twin-shaft mixer also located in the region (2) opposite the entrance of the wet virgin material. The process of manufacturing Hot Mix Asphalt (HMA) is thus finalized, being unloaded onto trucks or into storage silos via a drag conveyor (1).

As shown in Figure 2, since the region of the conveyor belt (6) in the vicinity of the dryer (5) constitutes the gateway for the virgin aggregate to the dryer (5), the temperature must be high. At this location, the gases inside the dryer may reach a temperature between 100-160°C. Additionally, the linear and circular movement inherent to the conveyor belt may cause accidents at work. Accordingly, side protectors (8) have been installed on both sides of the conveyor belt so that access to this region is barred. The side protectors (8) are symmetrical and fixed on the chassis structure in the region connecting the two mobilities. The shields that protect the belt region do not need thermal and acoustic insulation. The heat transfer by radiation in this region is not as high as in region (2). In this region, it is most important to bar operator access to the conveyor belt.

In region (2) where the burner and the external Pug-mill mixer are allocated, the combustion process performed by the burner is by way of an optimal ratio between fuel and air and high temperatures are noted due to the thermal radiation in the region. When heavy fuels are used, it is necessary to use jacketed pipes heated by thermal oil) or through electrical resistances.

So thermally and acoustically insulating shields (7) were installed in the region (2) which comprises the burner and the mixer in order to prevent any contact of the operators with heated systems. These shields are attached to the combustion chamber and to the baghouse by way of fastening elements. Since the protected region will likely require constant preventive and corrective maintenance, access to this sector cannot remain fully barred. Accordingly, an articulated system for these shields should facilitate necessary interventions, as shown in Figure 2.

## Claims

1. A mobile asphalt plant with a thermal and acoustic insulation, wherein said mobile asphalt plant comprises:
a gas exhaust duct;
a dosage system;
a rotary dryer (5);
an exhaust fan;
an inertial separator;
a baghouse;
a mixer;
a chimney; a conveyor belt (6) for the transfer of aggregate from the dosage system to the rotary dryer (5);
a drag conveyor (1) **characterised in that** said thermal and acoustic insulation comprises:
thermally and acoustically-insulating shields (7) installed in a region (2) which comprises the mixer and a burner in the rotary dryer (5) ; wherein the shields are attached to the baghouse and a combustion chamber by fastening elements; **in that** said thermal and acoustic insulation comprises an articulated system, wherein the articulated system is facilitating necessary interventions to the mixer and burner; and **in that** said thermal and acoustic insulation further comprises side protectors (8) located on both sides of the conveyor belt (6), wherein the side protectors are symmetrical and fixed on a chassis structure located on both sides of the asphalt plant.

## Patentansprüche

1. Eine mobile Asphaltanlage mit einer Wärme- und Schalldämmung, wobei die vorerwähnte mobile Asphaltanlage Folgendes umfasst:
eine Abgasleitung,
ein Dosiersystem,
einen Trommeltrockner (5),
ein Abluftgebläse,
einen Trägheitsabscheider,
einen Schlauchfilter,
ein Rührwerk,
einen Abzug,
ein Förderband (6) für den Transport von Zuschlagstoff vom Dosiersystem zum Trommeltrockner (5) und
einen Schleppförderer (1), **dadurch gekennzeichnet, dass** die Wärme- und Schalldämmung Folgendes umfasst:
wärme- und schalldämmende Schutzschilde (7), die in einem Bereich (2) angebracht sind, der das Rührwerk und einen Brenner im Trommeltrockner (5) umfasst,
wobei die Schutzschilde mittels Befestigungselementen am Schlauchfilter und einer Brennkammer befestigt sind, und dass die vorerwähnte Wärme- und Schalldämmung Folgendes umfasst:
ein gelenkiges System, wobei das gelenkige System die erforderlichen Arbeiten an Rührwerk und Brenner erleichtert,
und dass die vorerwähnte Wärme- und Schalldämmung weiterhin Seitenschützer (8) zu beiden Seiten des Förderbands (6) aufweist, wobei die Seitenschützer symmetrisch verlaufen und am Rahmen zu beiden Seiten der Asphaltanlage befestigt sind.

## Revendications

1. Usine d'asphalte mobile avec isolation thermique et acoustique, où ladite usine d'asphalte mobile comprend :
un conduit d'évacuation de gaz ;
un système de dosage ;
un séchoir rotatif (5) ;
un ventilateur d'évacuation ;
un séparateur par inertie ;
un filtre à manches ;
un mélangeur ;
une cheminée ;
une bande de convoyeur (6) destinée au transfert d'agrégat du système de dosage vers le séchoir rotatif (5) ;
un convoyeur à raclettes (1),
**caractérisée en ce que** ladite isolation thermique et acoustique comprend :
des écrans d'isolation thermique et acoustique (7) installés dans une zone (2) laquelle comprend le mélangeur et un brûleur dans le séchoir rotatif (5) ; où les écrans sont fixés sur le filtre à manches et sur une chambre de combustion au moyen d'éléments de fixation ;
**en ce que** ladite isolation thermique et acoustique comprend un système articulé, où le système articulé facilite des interventions nécessaires sur le mélangeur et le brûleur ;
et **en ce que** ladite isolation thermique et acoustique comprend en outre des protecteurs latéraux (8) situés des deux côtés de la bande de convoyeur (6), où lesdits protecteurs latéraux sont symétriques et fixés sur une structure de châssis positionnée des deux côtés de l'usine d'asphalte.
